# EUROPEAN PATENT SPECIFICATION

(11) **EP 3 722 802 B1**
(45) Date of publication and mention of the grant of the patent: **17.12.2025**
(21) Application number: 18889676.5
(22) Date of filing: 18.10.2018
(51) Int. Cl.: G01N 29/24, G01N 29/06, G01N 29/34, G01N 29/04, G01N 29/26

(54) **MULTI-FUNCTIONAL ULTRASONIC PHASED ARRAY IMAGING DEVICE**
MULTIFUNKTIONALES ULTRASCHALL-PHASENARRAY-BILDGEBUNGSGERÄT
DISPOSITIF D'IMAGERIE À RÉSEAU À COMMANDE DE PHASE ULTRASONORE MULTIFONCTIONNEL

(30) Priority: 12.12.2017 KR 20170169913
(43) Date of publication of application: 14.10.2020
(73) Proprietor: Korea Research Institute of Standards and Science, Daejeon 34113 (KR)
(72) Inventor: PARK, Choon-Su, Daejeon 34071 (KR); HONG, Sae Won, Hwaseong-Si Gyeonggi-do 18406 (KR); LEE, Young Ho, Hwaseong-Si Gyeonggi-do 18482 (KR)
(74) Representative: Lorenz Seidler Gossel Part. mbB
(86) International application number: PCT/KR2018/012307
(87) International publication number: WO 2019/117448

(56) References cited:
- JP-A- 2009 281 805
- JP-A- 2015 226 762
- KR-A- 20110 003 057
- KR-A- 20110 003 057
- KR-A- 20120 083 922
- KR-A- 20120 122 440
- US-A1- 2003 055 337
- US-A1- 2015 105 663

## Description

### [Technical Field]

The present invention is about multi-frequency ultrasonic phased array imaging device for detecting defects in an object, which provides not only two linear images but also non-linear higher-harmonic images and sub-harmonic images.

### [Background Art]

Non-destructive testing is a method of inspecting internal defects or a surface state of a workpiece without causing deformation of or damage to the workpiece in the field of manufacturing. Methods of non-destructive testing include liquid-penetrant testing, magnetic-particle inspection, acoustic-emission testing, acoustic-impact testing, radiography, eddy-current testing, thermal inspection, a holography technique, and ultrasonic testing is also one of the non-destructive inspection.

Ultrasonic testing is a method of examining the inside of an object to be inspected by transmitting an ultrasonic wave to the inside of the object to be inspected, receiving an ultrasonic wave reflected from the inside of the object to be inspected, and making images with received ultrasonic wave. In the early stage, ultrasonic testing was mainly used to examine the inside of a human body without incision. Objects to be inspected may also be inspected in the same manner, and therefore, recently, the ultrasonic testing has been widely used in the industrial field to determine whether or not defects present in the workpiece, or to reveal the type of the defect, when there are defects.

In the ultrasonic testing, a device called transducers which transmit and receive ultrasonic waves are inevitable. Transducers includes piezoelectric elements for transmission and reception of ultrasonic waves. The transducers may be classified as linear array transducer, curvilinear array transducer, annular array transducer, matrix array transducer, or the like depending on an array form of the piezoelectric elements included in the transducer, and a phased array transducer is a concept including those described above.

Since a control to, for example, change a point where an ultrasonic signal is concentrated according to a position to be measured by causing the transducer to transmit ultrasonic signals with corresponding phase differences to variously controlled delay times for piezoelectric elements of each of the various types of transducers may be performed, the phased array transducers have been used in various fields including ultrasonic imaging.

In general, in a single phased array transducer, piezoelectric elements have the same resonance frequency and in the case of having the same resonance frequency, only an image with a limited resolution may be ontained. Therefore, it limits availability depending on the type or size of defects in the object to be inspected in many cases, and some defects could not be detected from linear phased array imaging.

US 2003/055337 A1 relates to an ultrasonic transducer, method, and system for performing ultrasonic harmonic imaging in a medium or a living body. US 2015/105663 A1 discloses an ultrasonic device including a substrate, a first piezoelectric body, a second piezoelectric body, and an acoustic matching section. KR 2011 0003057 A relates to an ultrasonic probe used for transmitting an ultrasonic wave to a subject such as a living body or receiving ultrasonic waves from the subject, and an ultrasonic diagnostic apparatus to which the ultrasonic probe is applied.

### [Disclosure]

### [Technical Problem]

An object of the present invention is to provide a multi-frequency ultrasonic phased array imaging device for detecting defects in an object, which generates linear and non-linear images with various resolutions by using piezoelectric elements having various types of resonance frequencies to enable detection of various types of defects formed in an object to be inspected.

### [Technical Solution]

In one general aspect, a multi- frequency ultrasonic phased array imaging device for detecting defects in an object includes: a transducer configured to transmit a phased array ultrasonic signal to an object to be inspected, receive an ultrasonic signal reflected from the object to be inspected, and include at least one first piezoelectric element having a high resonance frequency and at least one second piezoelectric element having a resonance frequency lower than that of the first piezoelectric element, and at least one third piezoelectric element having a resonance frequency lower than that of the second piezoelectric element; a control unit configured to apply an operation signal to the transducer to control operations of the first piezoelectric element and the second piezoelectric element; and a portable imaging unit configured to calculate the operation signal applied from the control unit and the ultrasonic signal received by the transducer as a delay-sum for a phased array image to output the received ultrasonic signal as a phased array image.

According to the present application, the first piezoelectric element, the second piezoelectric element and the third piezoelectric element are sequentially arranged in a repeated manner, the resonance frequency of the first piezoelectric element is a positive integer multiple of the resonance frequency of the second piezoelectric element and the resonance frequency of the second piezoelectric element is a positive integer multiple of the resonance frequency of the third piezoelectric element, and the control unit is configured to apply the operation signal to the transducer to control one of the first piezoelectric element, the second piezoelectric element and the third piezoelectric element to transmit the ultrasonic signal, and to control the other piezoelectric elements that do not transmit the ultrasonic signal to receive the reflected ultrasonic signal.

The control unit is configured to apply the operation signal to the transducer and apply the operation signal to the second piezoelectric element to control the second piezoelectric element to transmit the ultrasonic signal, and to control the first piezoelectric element and the third piezoelectric element to receive the reflected ultrasonic signal, and the portable imaging unit is configured to output a harmonic phased array image and a subharmonic phased array image using the ultrasonic signals received in the first piezoelectric element and the third piezoelectric element.

### [Advantageous Effects]

Since only one of the first piezoelectric element or the second piezoelectric element transmits and receives an ultrasonic wave, the first piezoelectric element and the second piezoelectric element having different resonance frequencies, respectively, and an image is generated by using the received ultrasonic signal, it is possible to output images of an object to be inspected having different resolutions, thereby detecting various types of defects.

Further, the first piezoelectric element having a high resonance frequency may transmit an ultrasonic wave, the second piezoelectric element having a low resonance frequency may receive an ultrasonic wave reflected from an object to be inspected, and a non-linear sub-harmonic examination image of the object to be inspected may be output by using the received ultrasonic signal, such that it is possible to detect various types of defects that may not be detected by using the linear imaging technique.

Further, the second piezoelectric element having a low resonance frequency may transmit an ultrasonic wave, the first piezoelectric element having a high resonance frequency may receive an ultrasonic wave reflected from an object to be inspected, and a higher harmonic examination image of the object to be inspected may be output by using the received ultrasonic signal, such that it is possible to detect various types of defects that may not be detected by using the linear imaging technique.

### [Description of Drawings]

FIG. 1 is a schematic diagram illustrating a first exemplary embodiment.
FIG. 2 is a schematic diagram illustrating the first exemplary embodiment.
FIG. 3 is a schematic diagram illustrating a first operation mode according to the first exemplary embodiment.
FIG. 4 is a schematic diagram illustrating a second operation mode according to the first exemplary embodiment.
FIG. 5 is a schematic diagram illustrating a third operation mode according to the first exemplary embodiment.
FIG. 6 is a schematic diagram illustrating a fourth operation mode according to the first exemplary embodiment.

### [Best Mode]

Hereinafter, a multi-frequency ultrasonic phased array imaging device for detecting defects in an object according to preferred exemplary embodiments will be described in detail with reference to the accompanying drawings.

### [First Exemplary Embodiment]

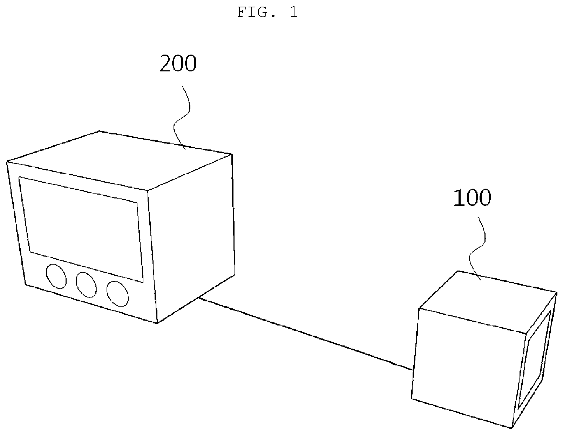

FIG. 1 schematically illustrates a first exemplary embodiment of the present disclosure. The first exemplary embodiment is not within the scope of the claims.

As illustrated in FIG. 1, a multi-frequency ultrasonic phased array imaging device for detecting defects in an object according to a first exemplary embodiment may include a transducer 100, a control unit (not illustrated), and a portable imaging unit 200.

The transducer 100 illustrated in FIG. 1 transmits a phased array ultrasonic signal to an object to be inspected, and receives an ultrasonic signal reflected from the object to be inspected. That is, the transducer 100 is disposed close to or comes into contact with the object to be inspected. In FIG. 1, the transducer 100 has a rectangular parallelepiped shape, but the present invention is not limited thereto. The transducer may have various shapes depending on shape of an object to be inspected.

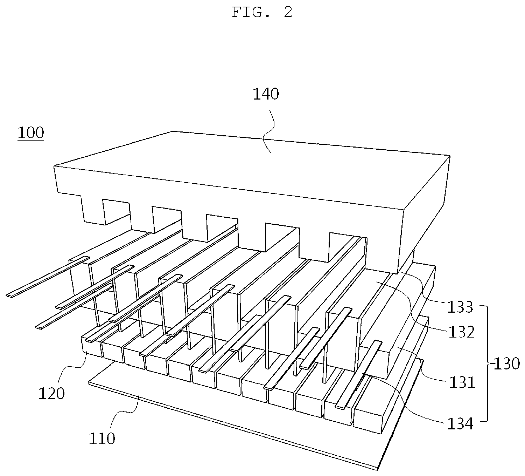

FIG. 2 is an exploded view illustrating the transducer 100.

As illustrated in FIG. 2, the transducer 100 may include an acoustic lens 110, a front matching layer 120, a vibrator unit 130, and a back layer 140.

The acoustic lens 110, the front matching layer 120, and the back layer 140 illustrated in FIG. 2 are components that are also included in a phased array transducer according to the related art. The respective components will be briefly described and then the vibrator unit 130 that is a feature of the first exemplary embodiment will be described in detail.

The acoustic lens 110 is to minimize a loss of an ultrasonic wave transmitted through the acoustic lens 110, and may be formed of various materials. The acoustic lens 110 comes into contact with or is disposed close to the object to be inspected. The acoustic lens 110 is formed of a soft material and thus may be deformed along a curve of a surface of the object to be inspected to correspond to various shapes of the object to be inspected.

The front matching layer 120 is positioned between the acoustic lens 110 and the vibrator unit 130 and provides acoustic impedance matching between the vibrator unit 130 and the object to be inspected, thereby transferring an ultrasonic wave generated in the vibrator unit 130 or reducing a loss of a reflected signal from the object to be inspected. That is, the front matching layer 120 serves as a kind of buffer that solves a problem such as image distortion due to a rapid change in acoustic impedance between the vibrator unit 130 and the object to be inspected. The front matching layer 120 may be formed in each of the piezoelectric elements included in the vibrator unit 130.

The back layer 140 is formed outside the vibrator unit 130, and may facilitate acoustic impedance matching with the vibrator unit 130, and may have a sound absorption characteristic.

The vibrator unit 130 is a portion where substantial transmission and reception of an ultrasonic wave is made, and may include vibrators that transmit and receive an ultrasonic wave by using various methods. However, according to an exemplary embodiment, the vibrators included in the vibrator unit 130 may include a first piezoelectric element 131 and a second piezoelectric element 132 as illustrated in FIG. 2. That is, the vibrator is the piezoelectric element in the first exemplary embodiment, but the type of the vibrator is not limited to the piezoelectric element.

The first piezoelectric element 131 and the second piezoelectric element 132 have different resonance frequencies, respectively. More specifically, a resonance frequency f1 of the first piezoelectric element 131 is higher than a resonance frequency f2 of the second piezoelectric element 132, and the resonance frequency f1 may be a positive integer multiple of the resonance frequency f2.

As illustrated in FIG. 2, the first piezoelectric element 131 and the second piezoelectric element 132 are alternately arranged. However, the first piezoelectric element 131 and the second piezoelectric element 132 may be arranged in a form in which a predetermined pattern is repeated. As an example of another pattern in which the first piezoelectric element 131 and the second piezoelectric element 132 are formed, a pattern in which two first piezoelectric elements 131 are consecutively arranged, and then two second piezoelectric elements 132 are consecutively arranged may be repeated.

A protective film 133 may be formed between the first piezoelectric element 131 and the second piezoelectric element 132 to prevent separation or crack caused by repetitive deformation, and the protective film 133 may be formed of a polymer material or may be formed integrally with the back layer.

As illustrated in FIG. 2, a wire 134 is formed on each of the first piezoelectric element 131 and the second piezoelectric element 132. The wire 134 is for transmission and reception of an operation signal and an ultrasonic signal to and from the control unit, and may be physically connected to the control unit.

As illustrated in FIG. 2, the first piezoelectric element 131 and the second piezoelectric element 132 may be different in size (height in FIG. 2) due to the difference in resonance frequency. To cover the difference in size, predetermined protrusions may protrude from the back layer 140 toward the piezoelectric element, the first piezoelectric element 131 may be inserted between the respective protrusions, and a protruding surface of the protrusion may be in contact with one surface of the second piezoelectric element 132.

The control unit applies the operation signal to the transducer 100 to control operations of the first piezoelectric element 131 and the second piezoelectric element 132. The operation signal applied from the control unit to the transducer 100 may cause the first piezoelectric element 131 or the second piezoelectric element 132 to transmit an ultrasonic wave to the object to be inspected, and may cause the first piezoelectric element 131 or the second piezoelectric element 132 to receive an ultrasonic wave reflected from the object to be inspected.

The control unit may be implemented by an embedded printed circuit board (PCB) mounted in the portable imaging unit 200 to be described later, or may be implemented in a form of software.

The portable imaging unit 200 is connected to the transducer 100, receives the operation signal applied from the control unit to the transducer 100 and the ultrasonic signal received by the transducer 100, calculates the operation signal and the received ultrasonic signal as a delay-sum for a phased array imaging, and outputs the received ultrasonic signal as a phased array image. The portable imaging unit 200 may include a calculation device and program for calculation of a phased array image therein, and a display may be formed on an outer surface of the portable imaging unit 200 to output an image.

Hereinafter, first to fourth operation modes which are different in regard to the operation signal applied from the control unit and the operations of the first piezoelectric element and the second piezoelectric element according to the operation signal will be described in detail with reference to the drawings.

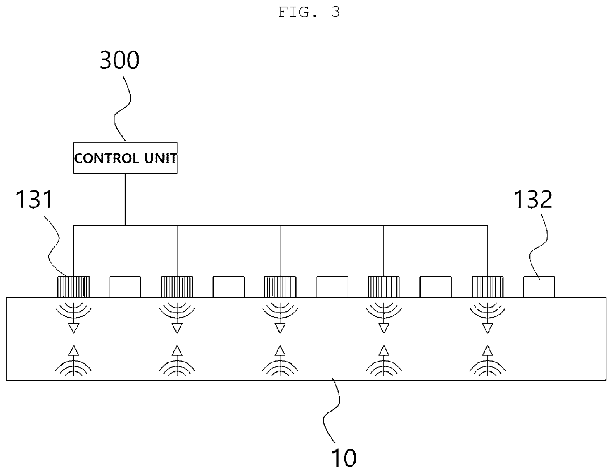

FIGS. 3 to 6 each schematically illustrate the first piezoelectric element 131 and the second piezoelectric element 132 included in the transducer, and the control unit connected to each piezoelectric element. FIG. 2 illustrates a case where the first piezoelectric element 131 and the second piezoelectric element 132 are different in size. However, for convenience, in FIGS. 3 to 6, the first piezoelectric element 131 and the second piezoelectric element 132 are the same in size, the first piezoelectric element 131 is indicated by hatching with vertical lines, the second piezoelectric element 132 is indicated by no lines, and the first piezoelectric element 131 and the second piezoelectric element 132 are also distinguished by reference numerals thereof.

### [First Operation Mode and Second Operation Mode]

In the first operation mode illustrated in FIG. 3, an ultrasonic wave is transmitted and received only by using the first piezoelectric element 131 to generate a linear ultrasonic phased array image.

For the operation in the above-described first operation mode, a control unit 300 applies an operation signal to the first piezoelectric element 131 to excite the first piezoelectric element 131, and the first piezoelectric element 131 transmits an ultrasonic signal to an object 10 to be inspected. Here, ultrasonic signals applied to the first piezoelectric element 131 may have a predetermined phase difference.

The ultrasonic signal transmitted from the first piezoelectric element 131 is transmitted through the object 10 to be inspected, and then is reflected from a bacwall(a distal end of the object to be inspected) of the object to be inspected, the reflected ultrasonic signal is received by the first piezoelectric element 131, the control unit 300 transmits the received ultrasonic signal to the portable imaging unit 200, and the portable imaging unit 200 generates and outputs a phased array image with reference to the received ultrasonic signal and the operation signal applied from the control unit 300 to the first piezoelectric element 131. The phased array image generated by and output from the portable imaging unit 200 is a linear phased array image.

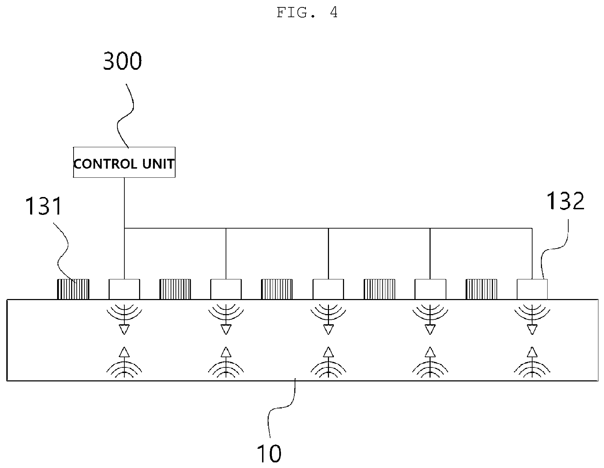

In the second operation mode illustrated in FIG. 4, similarly to the first operation mode, an ultrasonic wave is transmitted and received only by using the second piezoelectric element 132 to output a linear ultrasonic phased array image.

In the first operation mode and the second operation mode, the linear ultrasonic phased array image may be generated by using only the first piezoelectric element 131 or the second piezoelectric element 132, the first piezoelectric element 131 and the second piezoelectric element 132 having different resonance frequencies, respectively. The resonance frequency of the first piezoelectric element 131 is higher than the resonance frequency of the second piezoelectric element 132. Therefore, the linear ultrasonic phased array image generated by using the first piezoelectric element 131 has a characteristic that a resolution (resolution in a vertical direction in FIGS. 3 and 4) in an axial direction is increased as compared with the linear ultrasonic phased array image generated by using the second piezoelectric element 132, but a propagation distance is decreased, and thus the propagation distance thereof is short.

### [Third Operation Mode]

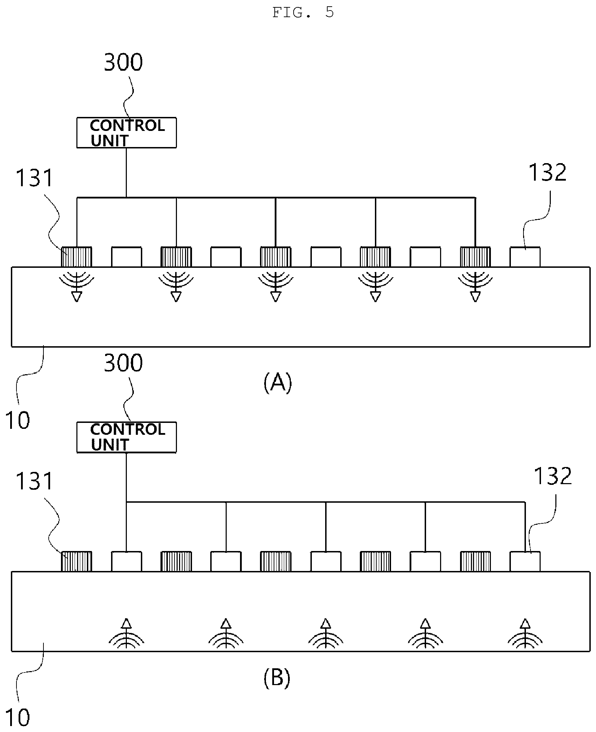

In the third operation mode illustrated in FIG. 5, a non-linear ultrasonic phased array image is generated by using both of the first piezoelectric element 131 and the second piezoelectric element 132.

For the operation in the above-described third operation mode, the control unit 300 applies an operation signal to the first piezoelectric element 131 to excite the first piezoelectric element 131, and the first piezoelectric element 131 transmits an ultrasonic signal to the object to be inspected 10 as illustrated in FIG. 5A. Here, ultrasonic signals applied to the first piezoelectric element 131 may have a predetermined phase difference, similarly to the first and second operation modes described above.

The ultrasonic signal transmitted from the first piezoelectric element 131 is transmitted through the object 10 to be inspected, and is reflected from the backwall (the distal end of the object to be inspected) of the object 10 to be inspected. The control unit 300 applies an operation signal to cause the second piezoelectric element 132 to receive the ultrasonic signal reflected from the backwall of the object 10 to be inspected, and then transmits the received ultrasonic signal to the portable imaging unit 200. The resonance frequency f1 of the first piezoelectric element 131 is n times the resonance frequency f2 of the second piezoelectric element 132 (n is a positive integer), and thus the ultrasonic signal received by the second piezoelectric element 132 is an n-th order subharmonic signal.

The subharmonic signal received by the second piezoelectric element 132 is transmitted to the portable imaging unit 200, and the portable imaging unit 200 outputs a non-linear sub-harmonic phased array image with reference to the received ultrasonic signal and the operation signal applied from the control unit 300 to the first piezoelectric element 131. In the sub-harmonic phased array image, a crack that may not be detected by a general linear phased array image may be detected. Specifically, in a case of a closed defect that is caused due to elasticity of a material of the object to be inspected when the defect is generated in the object to be inspected, the ultrasonic wave is usually transmitted through the closed defect in linear image, whereas, the ultrasonic signal from the closed defect in a non-linear sub-harmonic phased array image, thereby enabling detection of the closed defect.

### [Fourth Operation Mode]

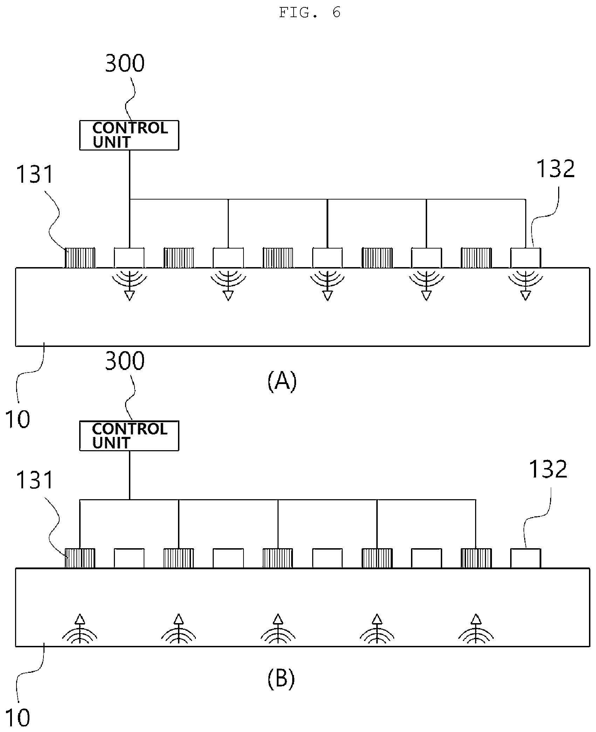

In the fourth operation mode illustrated in FIG. 6, a non-linear ultrasonic phased array image is generated by using both of the first piezoelectric element 131 and the second piezoelectric element 132.

The fourth operation mode is an operation mode in which a non-linear higher harmonic phased array image is generated, unlike the third operation mode. To this end, although both of the first piezoelectric element 131 and the second piezoelectric element 132 are used similarly to the third operation mode, the piezoelectric elements are used in a reverse manner to the third operation mode.

Specifically, as illustrated in FIG. 6, the control unit 300 applies an operation signal to the second piezoelectric element 132 to transmit an ultrasonic signal to the object 10 to be inspected, and applies an operation signal to the first piezoelectric element 131 to receive an ultrasonic signal that is reflected and incident again. The resonance frequency f1 of the first piezoelectric element 131 is n times the resonance frequency f2 of the second piezoelectric element 132, and thus the ultrasonic signal received by the first piezoelectric element 131 is an n-th order higher harmonic signal of the resonance frequency f1, and the portable imaging unit 200 may generate and output a non-linear higher harmonic phased array image by using the received n-th order higher harmonic signal. Similarly to the subharmonic phased array image, a crack that may not be detected by a general linear phased array image may be detected in the higher harmonic phased array image.

Specifically, in a case where an internal material of a structure is deformed due to an external force or stress, a subtle change of the material may be detected in the non-linear higher harmonic phased array image.

In the first and second operation modes described above, a linear subharmonic phased array image may be obtained. Therefore, the intensity of the ultrasonic signal applied from each piezoelectric element is immaterial. Therefore, the piezoelectric elements transmitting the ultrasonic signal in the first and second operation modes are sequentially excited and transmit the ultrasonic signal, or may transmit the ultrasonic signal through parallel excitation in which the piezoelectric elements are excited at the same time. In a case where the piezoelectric elements are excited at the same time, an ultrasonic signal with a higher intensity may be generated.

Unlike the first and second operation modes, in the third and fourth operation modes, a non-linear higher harmonic phased array image or a non-linear sub-harmonic phased array image is obtained, and thus there is a need to generate an ultrasonic signal with a higher intensity. Therefore, in the third and fourth operation modes, a signal may be obtained by using only parallel excitation in which one type of piezoelectric elements of the first and second piezoelectric elements that are alternately arranged are excited at the same time, and then the signal may pass through a band pass filter with a desired frequency as a center frequency to thereby obtain a non-linear higher harmonic phased array image or a non-linear subharmonic phased array image by a time delay and sum method. In a case of using the third and fourth operation modes, although not illustrated, the multi-frequency ultrasonic phased array imaging device for detecting defects may further include the band pass filter mounted between the portable imaging unit and a piezoelectric element that receives an ultrasonic signal of the first and second piezoelectric elements, the ultrasonic signal being reflected from the backwall of the object to be inspected.

### [Second Exemplary Embodiment]

Hereinafter, a multi-frequency ultrasonic phased array imaging device for detecting defects in an object according to a second exemplary embodiment which is part of the present invention will be described in detail.

The multi-frequency ultrasonic phased array imaging device for detecting defects in an object according to the second exemplary embodiment which is part of the present invention includes the same components as those of the first exemplary embodiment, except for vibrators included in a vibrator unit, that is, piezoelectric elements. Therefore, in the second exemplary embodiment according to the present invention, the piezoelectric elements included in the vibrator unit will be mainly described, and it is regarded that components that are not described below are the same between the first exemplary embodiment and the second exemplary embodiment.

According to the second exemplary embodiment which is part of the present invention, the vibrator unit includes first to third piezoelectric elements having different resonance frequencies, respectively. When a resonance frequency of the first piezoelectric element is f1, a resonance frequency of the second piezoelectric element is f2, and a resonance frequency of the third piezoelectric element is f3, f1 may be a positive integer multiple of f2, f3 may be a positive integer multiple of f2, and it is assumed hereinafter that f1 = 2f2 = 4f3.

According to the second exemplary embodiment which is part of the present invention, the first piezoelectric element, the second piezoelectric element, and the third piezoelectric element may be sequentially arranged in a repeated manner, and this is to obtain both a higher harmonic signal and a subharmonic signal by transmitting an ultrasonic signal using only one of the first piezoelectric element, the second piezoelectric element, or the third piezoelectric element, and receiving, by the remaining piezoelectric elements, an ultrasonic signal reflected from an object to be inspected.

For example, in a case where a control unit inputs an operation signal to the second piezoelectric element to excite the second piezoelectric element, the first piezoelectric element obtains a subharmonic signal and the third piezoelectric element obtains a higher harmonic signal, such that a second-order subharmonic image and a second-order higher harmonic image may be obtained, respectively. On the contrary, in a case where the third piezoelectric element transmits an ultrasonic signal, and the first and second piezoelectric elements receive an ultrasonic signal, a second-order higher harmonic signal and fourth-order higher harmonic signal may be obtained.

The present invention is not limited to the abovementioned exemplary embodiments, but may be variously applied, and may be variously modified without departing from the gist of the present invention insofar as falling under the scope of the appended claims.

### [Detailed Description of Main Elements]

- 100:: Transducer
- 110:: Acoustic lens
- 120:: Front matching layer
- 130:: Vibrator unit
- 131:: First piezoelectric element
- 132:: Second piezoelectric element
- 133:: Protective film
- 134:: Wire
- 140:: Back layer
- 200:: Portable imaging unit
- 300:: Control unit

## Claims

1. A multi-frequency ultrasonic phased array imaging device for detecting defects in an object comprising:
a transducer (100) configured to transmit a phased array ultrasonic signal to an object to be inspected, receive an ultrasonic signal reflected from the object to be inspected, and include at least one first piezoelectric element (131) having a high resonance frequency and at least one second piezoelectric element (132) having a resonance frequency lower than that of the first piezoelectric element (131), and at least one third piezoelectric element having a resonance frequency lower than that of the second piezoelectric element (132);
a control unit (300) configured to apply an operation signal to the transducer (100) to control operations of the first piezoelectric element (131) and the second piezoelectric element (132); and
a portable imaging unit (200) configured to calculate the operation signal applied from the control unit (300) and the ultrasonic signal received by the transducer (100) as a delay-sum for a phased array image to output the received ultrasonic signal as a phased array image,
**characterized in that** the first piezoelectric element (131), the second piezoelectric element (132) and the third piezoelectric element are sequentially arranged in a repeated manner,
the resonance frequency of the first piezoelectric element (131) is a positive integer multiple of the resonance frequency of the second piezoelectric element (132) and the resonance frequency of the second piezoelectric element (132) is a positive integer multiple of the resonance frequency of the third piezoelectric element, and
the control unit (300) is configured to apply the operation signal to the transducer (100) to control one of the first piezoelectric element (131), the second piezoelectric element (132) and the third piezoelectric element to transmit the ultrasonic signal, and to control the other piezoelectric elements that do not transmit the ultrasonic signal to receive the reflected ultrasonic signal.

2. The multi-frequency ultrasonic phased array imaging device for detecting defects in an object of claim 1, wherein the control unit (300) is configured to apply the operation signal to the transducer (100) and apply the operation signal to the second piezoelectric element (132) to control the second piezoelectric element (132) to transmit the ultrasonic signal, and to control the first piezoelectric element (131) and the third piezoelectric element to receive the reflected ultrasonic signal, and the portable imaging unit is configured to output a harmonic phased array image and a subharmonic phased array image using the ultrasonic signals received in the first piezoelectric element (131) and the third piezoelectric element.

## Patentansprüche

1. Phasengesteuerte Mehrfrequenz-Ultraschall-Bildgebungsvorrichtung zum Erkennen von Defekten in einem Objekt, umfassend:
einen Wandler (100), der so konfiguriert ist, dass er ein phasengesteuertes Ultraschallsignal zu einem zu untersuchenden Objekt überträgt, ein Ultraschallsignal empfängt, das von dem zu untersuchenden Objekt reflektiert wird, und mindestens ein erstes piezoelektrisches Element (131) beinhaltet, das eine hohe Resonanzfrequenz aufweist, und mindestens ein zweites piezoelektrisches Element (132) beinhaltet, das eine Resonanzfrequenz aufweist, die niedriger als die des ersten piezoelektrischen Elements (131) ist, und mindestens ein drittes piezoelektrisches Element beinhaltet, das eine Resonanzfrequenz aufweist, die niedriger als die des zweiten piezoelektrischen Elements (132) ist;
eine Steuereinheit (300), die so konfiguriert ist, dass sie ein Betriebssignal an den Wandler (100) anlegt, um den Betrieb des ersten piezoelektrischen Elements (131) und des zweiten piezoelektrischen Elements (132) zu steuern; und
eine tragbare Bildgebungseinheit (200), die so konfiguriert ist, dass sie das Betriebssignal, das von der Steuereinheit (300) angelegt wird, und das Ultraschallsignal, das von dem Wandler (100) empfangen wird, als eine Verzögerungssumme für ein phasengesteuertes Bild berechnet, um das empfangene Ultraschallsignal als ein phasengesteuertes Bild auszugeben,
**dadurch gekennzeichnet, dass** das erste piezoelektrische Element (131), das zweite piezoelektrische Element (132) und das dritte piezoelektrische Element in wiederholter Weise sequentiell angeordnet sind,
die Resonanzfrequenz des ersten piezoelektrischen Elements (131) ein positives ganzzahliges Vielfaches der Resonanzfrequenz des zweiten piezoelektrischen Elements (132) ist und die Resonanzfrequenz des zweiten piezoelektrischen Elements (132) ein positives ganzzahliges Vielfaches der Resonanzfrequenz des dritten piezoelektrischen Elements ist, und
die Steuereinheit (300) so konfiguriert ist, dass sie das Betriebssignal an den Wandler (100) anlegt, um eines von dem ersten piezoelektrischen Element (131), dem zweiten piezoelektrischen Element (132) und dem dritten piezoelektrischen Element so zu steuern, dass es das Ultraschallsignal überträgt, und die anderen piezoelektrischen Elemente, die das Ultraschallsignal nicht übertragen, so zu steuern, dass sie das reflektierte Ultraschallsignal empfangen.

2. Phasengesteuerte Mehrfrequenz-Ultraschall-Bildgebungsvorrichtung zum Erkennen von Defekten in einem Objekt nach Anspruch 1, wobei die Steuereinheit (300) so konfiguriert ist, dass sie das Betriebssignal an den Wandler (100) anlegt und das Betriebssignal an das zweite piezoelektrische Element (132) anlegt, um das zweite piezoelektrische Element (132) so zu steuern, dass es das Ultraschallsignal überträgt, und das erste piezoelektrische Element (131) und das dritte piezoelektrische Element so zu steuern, dass sie das reflektierte Ultraschallsignal empfangen, und die tragbare Bildgebungseinheit so konfiguriert ist, dass sie ein harmonisches phasengesteuertes Bild und ein subharmonisches phasengesteuertes Bild unter Verwendung der Ultraschallsignale ausgibt, die in dem ersten piezoelektrischen Element (131) und dem dritten piezoelektrischen Element empfangen werden.

## Revendications

1. Dispositif d'imagerie à réseau à commande de phase à ultrasons multifréquence destiné à détecter des défauts dans un objet, comprenant :
un transducteur (100) configuré pour transmettre un signal ultrasonore en réseau à commande de phase à un objet à inspecter, recevoir un signal ultrasonore réfléchi depuis l'objet à inspecter, et comporter au moins un premier élément piézoélectrique (131) présentant une fréquence de résonance élevée et au moins un deuxième élément piézoélectrique (132) présentant une fréquence de résonance inférieure à celle du premier élément piézoélectrique (131), et au moins un troisième élément piézoélectrique présentant une fréquence de résonance inférieure à celle du deuxième élément piézoélectrique (132) ;
une unité de commande (300) configurée pour appliquer un signal de fonctionnement au transducteur (100) pour commander des fonctionnements du premier élément piézoélectrique (131) et du deuxième élément piézoélectrique (132) ; et
une unité d'imagerie portable (200) configurée pour calculer le signal de fonctionnement appliqué depuis l'unité de commande (300) et le signal ultrasonore reçu par le transducteur (100) comme une somme de retard pour une image en réseau à commande de phase pour délivrer en sortie le signal ultrasonore reçu comme une image en réseau à commande de phase,
**caractérisé en ce que** le premier élément piézoélectrique (131), le deuxième élément piézoélectrique (132) et le troisième élément piézoélectrique sont disposés séquentiellement de manière répétée,
la fréquence de résonance du premier élément piézoélectrique (131) est un multiple entier positif de la fréquence de résonance du deuxième élément piézoélectrique (132) et la fréquence de résonance du deuxième élément piézoélectrique (132) est un multiple entier positif de la fréquence de résonance du troisième élément piézoélectrique, et
l'unité de commande (300) est configurée pour appliquer le signal de fonctionnement au transducteur (100) pour commander un du premier élément piézoélectrique (131), du deuxième élément piézoélectrique (132) et du troisième élément piézoélectrique pour transmettre le signal ultrasonore, et pour commander l'autre élément piézoélectrique qui ne transmet pas le signal ultrasonore pour recevoir le signal ultrasonore réfléchi.

2. Dispositif d'imagerie à réseau à commande de phase à ultrasons multifréquence selon la revendication 1, dans lequel l'unité de commande (300) est configurée pour appliquer le signal de fonctionnement au transducteur (100) et appliquer le signal de fonctionnement au deuxième élément piézoélectrique (132) pour commander le deuxième élément piézoélectrique (132) pour transmettre le signal ultrasonore, et pour commander le premier élément piézoélectrique (131) et le troisième élément piézoélectrique pour recevoir le signal ultrasonore réfléchi, et l'unité d'imagerie portable est configurée pour délivrer en sortie une image à réseau à commande de phase harmonique et une image à réseau à commande de phase sous-harmonique en utilisant les signaux ultrasonores reçus dans le premier élément piézoélectrique (131) et le troisième élément piézoélectrique.
